# EUROPEAN PATENT APPLICATION

(11) **EP 3 503 013 A1**
(43) Date of publication of application: **26.06.2019**
(21) Application number: 17840739.1
(22) Date of filing: 23.03.2017
(51) Int. Cl.: G06Q 40/04

(54) **METHOD AND SYSTEM FOR CONDUCTING DIGITAL ASSET TRANSACTION ACCORDING TO STRATEGY**

(30) Priority: 18.08.2016 CN 201610685435
(71) Applicant: Suzhou Superblock Chain Information Science & Technology Co., Ltd., Suzhou, Jiangsu 215000 (CN)
(72) Inventor: SHI, Xingguo, Jiangsu 215000 (CN); CHEN, Guangyu, Jiangsu 215000 (CN)
(74) Representative: Haseltine Lake Kempner LLP
(86) International application number: PCT/CN2017/077835
(87) International publication number: WO 2018/032762

(57) **Abstract**

A method and a system for strategy-based digital asset trading are disclosed. The method includes: 1) generating an ownership identifier for a digital asset; 2) setting, in a transaction server, a transaction strategy for a digital asset owner associated with each ownership identifier; and 3) performing, by the transaction server, transaction matching and pricing according to a transaction strategy of a digital asset purchaser and the transaction strategy set for the ownership identifier. The method removes a bottleneck of human dealmaking in digital asset transactions, by performing direct matching of a supplier and a buyer of a fragmented transaction, thereby solving a low-efficiency problem in digital asset transactions in the Internet era.

## Description

### TECHNICAL FIELD

The invention relates to the field of computer technologies, and specifically to the methodology and system of computer automated trading of the rights and the interests of diversified digital assets.

### BACKGROUND OF THE INVENTION

Many forms of ownership transactions exist in social activities, which include various types of compensable ownership transfers and usage. The majority of ownership transaction is manually facilitated by intermediary agent companies. In the fields where value and ownership can be easily measured (e.g. financial securities), computer automatically matched trading could be conducted at high efficiency. However, as for the trading of rights and interests of digital assets (e.g. copyright, usage right, and dealership of digitalized works, or digitalized asset certification of real assets), it is harder to automate dealmaking and pricing. The most commonly dealmaking and trading methods include:

### 1) Online agent transaction mode

Online pricing and trading: works and digital assets are protected via copyright declaration or digital right management (DRM). Their transactions are accomplished through payment pricing based on copy sales volume or revenue sharing with the platform.

Buy-out transaction: digital asset is purchased from it owner at a buy-out price (or in the form of contribution fee, issue right, etc.).

### 2) Off-line agent transaction mode

Delegate or cooperative publication: owners of digital assets cooperate with publishing organizations. Transactions are completed according to the traditional royalty sharing methods.

Above transaction methods are not suitable for the development trends of the fragmented creation and fragmented consumption in the Internet era. Because a lack of appropriate quantitative strategy for the rights and interests of digital assets, digital assets can neither be priced objectively, nor realize universal or extensive dealmaking. As a result, for the sake of the distribution, considerable digital assets authors abandon part of their rights and let the platform make distribution for free. Or they undertake the distribution cost by themselves and suffer copyright infringement from the Internet.

### SUMMARY OF THE INVENTION

Considering problems existing in current technologies, the goal of this invention is to provide a method and a system, which allow strategy-based trading of digital assets. This invention contains a transaction server and decentralized network nodes. Meanwhile, the transaction server can also play a role of decentralized network node.

The present invention can include one or more of the following aspects:
1. Generating digital finger prints for digital assets, and combining the digital finger prints with optionally extensible description information to form an ownership registration data block A. The extensible description information is used to describe the properties of the digital assets, including author/obligee/asset type etc. The extensible description information is optional, namely, users can choose not to provide any descriptive information for the consideration of privacy. Under such condition, "extensible descriptive information" is null. When provided, such information can be used in the inquiry and classification process of digital asset registration information.
2. In a decentralized network, registering the ownership registration data block A, acquiring the successfully registered index tag. The index tag and the digital asset descriptive information together form the ownership identification. The digital asset descriptive information is the descriptive information based on the definition on the management which the transaction server conducts on digital assets.
3. On transaction server, the ownership identification is regarded as the subject. A trading strategy is set for every ownership identification;
4. Transaction server matches transactions and sets pricing for users according to trading strategy.

Implementations of the present invention can include the following:
A method for strategy-based digital asset trading includes the following steps:
1) Generating an ownership identification for a digital asset;
2) Setting a trading strategy for a digital asset owner associated with the ownership identification on a transaction server; and
3) Matching transactions, on the transaction server, according to a trading strategy for a digital asset purchaser and the trading strategy associated with the ownership identification.

Furthermore, step 1) of the method can includes: first, generating a digital finger print for the digital asset, and then creating the ownership identification for the digital finger print.

Furthermore, step 1) of the method can includes: first, generating a digital finger print for the digital asset, and then registering in a decentralized network to generate the ownership identification according to the digital finger print.

Furthermore, step 1) of the method can includes: combining the digital finger print of the digital asset and optional descriptive information as an ownership registration data block A, registering the ownership registration data block A in the decentralized network, wherein the transaction server is configured to obtain a successfully registered index tag; and combining the index tag with the descriptive information to generate the ownership identification.

Furthermore, step 1) of the method can includes: first, generating a digital finger print for the digital asset; and registering the digital finger print to the transaction server to generate the ownership identification.

Furthermore, step 1) of the method can further includes: first, combining the digital finger print of the digital asset with optionally extensible and descriptive information as an ownership registration data block A, registering the ownership registration data block A in the transaction server to obtain a successfully registered index tag, and combining the index tag with digital asset descriptive information to generate ownership identification.

Furthermore, the extensible and descriptive information can include: author, oblige, and asset type.

Furthermore, the transaction server information can classify digital assets according to the extensible and descriptive information, wherein the digital asset descriptive information includes description information for managing digital assets defined by the transaction server.

Furthermore, the transaction strategy for digital asset owner can describe a method of citing or using the digital asset, and restrictive conditions, transaction matching conditions, and pricing strategy for the digital assets, wherein the trading strategy by the digital asset purchaser can include pricing strategy and methods of citing or using digital assets.

Furthermore, the transaction server can match the first trading strategy for with the second trading strategy of the digital asset purchaser, wherein after a successful matching, the transaction server can generate a digital contract and conduct pricing as well as settlement for the digital asset owner and the digital asset purchaser in the effective period of an associated digital contract.

Furthermore, the pricing strategy can include a transaction pricing method for the digital asset, wherein when he digital asset purchaser cites or uses the digital asset, the transaction server is triggered to settle accounts for the digital asset owner and the digital asset purchaser according to the quantity used in actual citation or actual usage.

A system for strategy-based digital asset trading includes a transaction server; a user terminal device; and a purchaser application unit.

The transaction server can receive a digital asset and a trading strategy from a digital asset owner through the user terminal devices, and to receive a trading strategy from a digital asset purchaser send via the user terminal device.

The transaction server is configured to generate a unique ownership identification for the digital asset and the trading strategy set for the digital asset owner, to match transaction and prices on based on the trading strategy for a digital asset purchaser and the trading strategy associated with the ownership identification, and to provide citation or a user interface for the digital asset.

The purchaser application unit can use or cite the digital asset, or act as agent for citation or a user interface for the digital asset.

Furthermore, system for strategy-based digital asset trading can include nodal computers in a decentralized network, wherein user terminal device can generate a digital finger print for the digital asset under command of the digital asset owner and to send the digital finger print to the transaction server, or the transaction server is configured to generate a single digital finger print for the digital asset, wherein the transaction server can combine the finger print of the digital asset with an optionally extensible and descriptive information to produce an ownership registration data block A, and to subsequently register the ownership registration data block A on one of the node computers in the decentralized network to obtain an successfully registered index tag, wherein the index tag is combined with digital asset descriptive information to generate the ownership identification for the digital asset.

Furthermore, the user terminal device can automatically generate the ownership registration data block A under command the digital asset owner and to register in the decentralized network, wherein after the index tag is successfully registered, wherein the index tag is submitted to the transaction server via user terminal devices, wherein the transaction server can generate a corresponding ownership identification for the index tag.

The present invention can include the following main steps:
1. Automatically generating an ownership identification: using a digital finger print algorithm to obtain a unique digital identification of digital asset (access to transaction server via user's PC or browsers). Adding optionally extensible and descriptive information to the digital identification and combine them as an ownership registration data block A, then submitting it to a decentralized network node to register. After the data block A is successfully registered and stored in decentralized network, the index tag and digital asset descriptive information form a data block B in the decentralized network. The data block B is the ownership identification for the digital asset.
2. Setting a trading strategy for the ownership identification: the trading strategy is a group of customizable rules for the specific ownership identification. The rules describe the transaction restrictive condition, transaction match condition, corresponding pricing strategy, which the digital asset uses or cites (e.g. display, delegation, recreation etc.). The content of the trading strategy can be customized by users, conducted or explained by transaction server (e.g. match or eliminate according to keywords, match or eliminate according to preconditions etc.) The potential user of digital asset can set a different trading strategy for the role of purchaser. That trading strategy describes the pricing strategy acceptable by the purchaser in purchasing the citation or using right of a digital asset.
3. Matching the dealmaking needs according to the trading strategies: the transaction server automatically matches the transaction according to the trading strategy set by the digital asset supplier and purchaser. When the transaction strategies set by both parties mutually match for each other, a transaction match is successful. It will send a transaction confirmation to both parties and generate a digital contract. The digital contract contains the match records and reference or usage method of trading strategy;
4. Pricing according to the digital contract and the trading strategies: after a transaction successfully matches, the transaction purchaser obtains the citation or use interface corresponding to the ownership identification. The purchaser can cite and utilize the digital asset via the interface, and in the effective duration of the digital contract, can price the digital asset according to the pricing strategy specified in the trading strategy.

In the above, if the ownership identification has a nested property or a parallel property, it can price based on division according to the division strategy in the trading strategy.

Compared with existing technologies, the present invention includes the following benefits:
This invention provides a solution which is applicable for networking and automatized application on ownership identification and usage right trading for digital assets. For the ownership identification, the disclosed invention system and method adopt an auxiliary ownership identification method in a decentralized network, which makes the registration and ownership identification process more easily automated by computers. This will be much more efficient compared to registration and ownership identification methods by traditional organizations. Regarding usage right transactions, this invention binds digital asset to quantitative trading strategies, and employ computers to automatically complete ownership identification, matching, reference, pricing or other procedure for digital assets. This will be suitable to meet the transaction demand in the Internet era. The traditional network-based transactions of digital assets can only conclude a transaction by the consultation with a website operator, a publisher, an agency or an owner of a digital asset about the method and price for a transaction in discussion. Owning to the limitation to communication, both parties can hardly have sufficient communications, which takes a long time before a transaction is made successfully. Before the transaction, the digital asset has a high risk of theft and it is difficult to provide proof when a theft has occurred. Because of the high speed of information transmission, the value of digital asset is seriously influenced by time limitation. Owing to the low efficiency of traditional transactions, some digital asset owners renounce the ownership in order to acquire the effect of publicity, but only have the demand for the right of authorship. The present invention provides a better solution to above problems. The matching method based on trading strategies can guarantee of both parties' demands can be well expressed. High successful matching rate can be reached using computer matching trading strategy. Transaction behavior can be specified to a certain number. The pricing granularity is also more superior to traditional coordinated pricing methods. Real time pricing methods make the price of digital assets more appropriate for the market demand. Decentralized ownership identification method meet the demand for fast speed and can easily provide proof for embezzlement. This invention has better adaptability for the fragmented trend of production and consumption and the increased output of network digital assets.

### BRIEF DESCRIPTION OF THE DRAWINGS

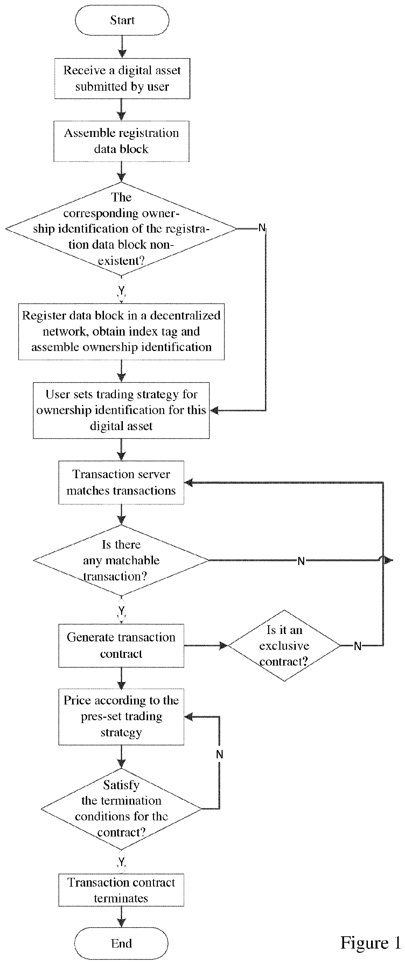

Figure 1 illustrates an implementation procedure in accordance with the present invention.
Figure 2 illustrates a system structure in accordance with the present invention.
Figure 3 illustrates the ownership registration data block structure in accordance with the present invention.
Figure 4 illustrates the ownership identification data structure in accordance with the invention.

### DETAILED DESCRIPTION OF IMPLEMENTIONS

The technical content of the present invention will be further described in detail with reference to the accompanying drawings.

### Implementation procedure 1

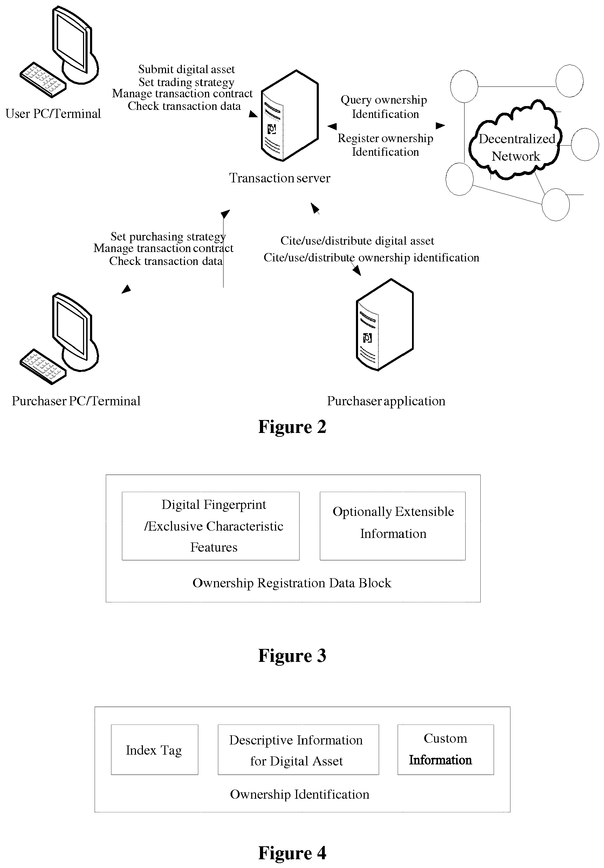

As Figure 2 shows, the disclosed system includes a transaction server, a node computer in a decentralized network, a user PC/terminal device (used by digital asset owner or digital asset purchaser), and a purchaser application unit (software/interface/server etc.).
1. The digital asset owner uses a digital finger print (e.g. digital abstract) algorithm for trading digital assets to obtain the digital finger print of the digital asset.
2. A user submits the digital asset and its digital finger print to the transaction server via the PC/terminal devices. Or user can submit the digital asset to the transaction server, which will generate the corresponding digital finger print for the digital asset.
3. The transaction server receives the digital asset and its corresponding digital finger print. It generates extensible and descriptive information based on user customization or system default settings. The transaction server and the digital finger print form the ownership registration data block A (See Figure 3). The extensible and descriptive information contains the basic property description of the digital asset, including author/obligee information, create/publish time, and digital asset category/character set/codec protocol etc. The procedure of submitting and registering data block A to generate corresponding ownership identification is as follows:
   a) Sending a registration request to node computer in decentralized network;
   b) Registering and storing a data block A according to decentralized registration and storage protocol in the decentralized network;
   c) Monitoring or inquiring registration status by the transaction server. After successfully registered and stored, transaction server records an index tag of data block A in the decentralized network;
   d) Adding digital asset descriptive information to the index tag, which are encapsulated as data block B in accordance with Figure 4. Data block B is the ownership identification for the digital asset. Among them, digital asset descriptive information contains user account information in the transaction server or a pointer which can index the user account information.
4. The digital asset owner can set a trading strategy for the ownership identification corresponding to the digital asset. The trading strategy can include restrictive conditions, match conditions, pricing conditions, division strategy, the method for digital asset to be cited or used, containing display of inbound link/remote/local/cache, embedding/embedded, agent, co-creation/recreation etc.
5. The digital asset purchaser can access the transaction server via his or her PC/terminal and set a purchasing trading strategy. The purchasing trading strategy can include expected citation/usage method, acceptable pricing strategy, restrictive condition, etc.
6. The transaction server traverses ownership identification. It can obtain user account information via digital asset descriptive information in ownership identifications. It also can obtain the trading strategy set by the user for the ownership identification. According to the trading strategy set by digital asset owner and purchaser, it will match the potential transaction demands, methods include:
   a) According to the given strategy, automatically accomplishing transaction matching;
   b) According to the given strategy, automatically recommending the most appropriate transaction, and allowing both parties to select;
   c) Both parties can search the potential trading partner according to their expectation and offer suggestions on trading strategy in search results for both parties to adjust trading strategy; and
   d) Both parties can search potential counterpart according to their expected trading strategy and can provide an interface for both parties.
7. After the transaction is matched, the transaction server generates a digital contract for both parties and conduct subsequent pricing strategy according to the digital contract, which can include the following steps::
   a) The purchaser obtains the citation/usage interface of corresponding digital asset. Through the interface, one can realize the citation/usage for the digital asset. It will be displayed/used in an application specified by purchaser;
   b) Every citation or usage of the digital asset the purchaser triggers the corresponding pricing strategy stored in transaction server, and sets pricing for the action of citation/usage;
   c) The pricing results will be sent to both parties simultaneously;
   d) If this procedure satisfies the termination conditions in the trading strategy, the transaction will be ended. The citation/usage interface will not be effective anymore. The display/usage function in purchaser application will end.

Alternatively:
a) The transaction server grants the corresponding citation/usage identification for the digital asset to a purchaser. When the purchaser uses the digital asset in a specified application, the purchaser needs to show the citation/usage identification;
b) When purchaser shows the citation/usage identification, which triggers the corresponding pricing strategy on the transaction sever;
c) The pricing result is sent to both parties at the same time;
d) The transaction will end when it the termination conditions in the trading strategy.
The citation/usage identification for the digital asset will not be valid anymore. The transaction server will send termination notifications to both parties.

## Claims

1. A method for strategy-based digital asset trading, comprising:
1) generating an ownership identification for a digital asset;
2) setting a first trading strategy for a digital asset owner associated with the ownership identification on a transaction server; and
3) matching transactions, on the transaction server, according to a second trading strategy for a digital asset purchaser and the first trading strategy associated with the ownership identification.

2. The method according to claim 1, wherein step 1) includes:
generating a digital finger print for the digital asset; and
creating the ownership identification for the digital finger print.

3. The method according to claim 2, wherein step 1) includes:
generating a digital finger print for the digital asset; and
registering in a decentralized network to generate the ownership identification according to the digital finger print.

4. The method according to claim 3, wherein step 1) includes:
combining the digital finger print of the digital asset and optional descriptive information as an ownership registration data block A;
registering the ownership registration data block A in the decentralized network, wherein the transaction server is configured to obtain a successfully registered index tag; and
combining the index tag with the descriptive information to generate the ownership identification.

5. The method according to claim 1, wherein step 1) includes:
generating a digital finger print for the digital asset; and
registering the digital finger print to the transaction server to generate the ownership identification.

6. The method according to claim 5, wherein step 1) further includes:
combining the digital finger print of the digital asset with optionally extensible and descriptive information as an ownership registration data block A;
registering the ownership registration data block A in the transaction server to obtain a successfully registered index tag; and
combining the index tag with digital asset descriptive information to generate ownership identification.

7. The method according to claim 6, wherein the extensible and descriptive information includes author, obligee, and an asset type.

8. The method according to claim 6, wherein the transaction server information classifies digital assets according to the extensible and descriptive information, wherein the digital asset descriptive information includes description information for managing digital assets defined by the transaction server.

9. The method according to claim 1, wherein the first transaction strategy for digital asset owner describes a method of citing or using the digital asset, and restrictive conditions, transaction matching conditions, and pricing strategy for the digital assets, wherein the second trading strategy by the digital asset purchaser includes pricing strategy and methods of citing or using digital assets.

10. The method according to claim 9, wherein the transaction server is configured to match the first trading strategy for with the second trading strategy of the digital asset purchaser, wherein after a successful matching, the transaction server is configured to generate a digital contract and conduct pricing as well as settlement for the digital asset owner and the digital asset purchaser in the effective period of an associated digital contract.

11. The method according to claim 9, wherein the pricing strategy includes a transaction pricing method for the digital asset, wherein when he digital asset purchaser cites or uses the digital asset, the transaction server is triggered to settle accounts for the digital asset owner and the digital asset purchaser according to the quantity used in actual citation or actual usage.

12. A system for strategy-based digital asset trading, comprising:
a transaction server; a user terminal device; and a purchaser application unit,
wherein the transaction server is configured to receive a digital asset and a first trading strategy from a digital asset owner through the user terminal devices, and to receive a second trading strategy from a digital asset purchaser send via the user terminal device,
wherein the transaction server is configured to generate a unique ownership identification for the digital asset and the first trading strategy set for the digital asset owner, to match transaction and prices on based on the second trading strategy for a digital asset purchaser and the first trading strategy associated with the ownership identification, and to provide citation or a user interface for the digital asset,
wherein the purchaser application unit is configured to use or cite the digital asset, or act as agent for citation or an user interface for the digital asset.

13. The system according to claim 12, further comprising:
nodal computers in a decentralized network, wherein user terminal device is configured to generate a digital finger print for the digital asset under command of the digital asset owner and to send the digital finger print to the transaction server, or the transaction server is configured to generate a single digital finger print for the digital asset,
wherein the transaction server is configured to combine the finger print of the digital asset with an optionally extensible and descriptive information to produce an ownership registration data block A, and to subsequently register the ownership registration data block A on one of the node computers in the decentralized network to obtain an successfully registered index tag, wherein the index tag is combined with digital asset descriptive information to generate the ownership identification for the digital asset.

14. The system according to claim 13, wherein the user terminal device is configured to automatically generate the ownership registration data block A under command the digital asset owner and to register in the decentralized network, wherein after the index tag is successfully registered, wherein the index tag is submitted to the transaction server via user terminal devices, wherein the transaction server is configured to generate a corresponding ownership identification for the index tag.
